# EUROPEAN PATENT APPLICATION

(11) **EP 4 274 265 A1**
(43) Date of publication of application: **08.11.2023**
(21) Application number: 21921868.2
(22) Date of filing: 29.01.2021
(51) Int. Cl.: H04W 4/02

(54) **POSITIONING METHOD AND APPARATUS**

(71) Applicant: Huawei Technologies Co., Ltd., Shenzhen, Guangdong 518129 (CN)
(72) Inventor: ZHOU, Runze, Shenzhen, Guangdong 518129 (CN)
(74) Representative: Pfenning, Meinig & Partner mbB
(86) International application number: PCT/CN2021/074449
(87) International publication number: WO 2022/160263

(57) **Abstract**

This application provides a method for positioning a terminal device and an apparatus. The method includes: A first network device determines a first time, where the first time is a scheduled time at which a terminal device is to be positioned; and then sends first indication information, where the first indication information is used for enabling the terminal device to enter a connected state at the first time or before the first time, so that a delay of positioning the terminal device can be reduced, and a requirement in some scenarios that require a low positioning delay is met.

## Description

### TECHNICAL FIELD

Embodiments of this application relate to the field of communication technologies, and more specifically, to a positioning method and an apparatus.

### BACKGROUND

In recent years, with rapid development of an internet of things (Internet of Things, IoT) technology, various types of terminal devices emerge. In an actual working scenario, location information of these terminal devices usually needs to be obtained.

In the conventional technology, when a terminal device is to be positioned, a positioning procedure usually requires a long period of time. However, in some scenarios, the terminal device needs to be positioned in a short period of time. When the conventional technology is used for positioning the terminal device, a requirement for a low delay cannot be met. Therefore, a new positioning method needs to be proposed to resolve the foregoing problem in the conventional technology.

### SUMMARY

This application provides a positioning method and an apparatus, to reduce a positioning delay.

According to a first aspect, a positioning method is provided and includes: A first network device determines a first time, where the first time is a scheduled time at which the terminal device is to be positioned. The first network device sends first indication information, where the first indication information is used for enabling the terminal device to enter a connected state at the first time or before the first time.

According to the solutions of this application, after determining the scheduled first time at which the terminal device is to be positioned, the first network device sends the first indication information, so that the terminal device enters the connected state when a second network device initiates a positioning procedure or before the second network device initiates the positioning procedure. Compared with the conventional technology in which the terminal device enters the connected state only after the second network device initiates the positioning procedure, a delay of positioning the terminal device can be reduced in the solutions of this application.

With reference to the first aspect, in some implementations of the first aspect, that the first network device sends first indication information includes: The first network device sends the first indication information to the terminal device, where the first indication information indicates the terminal device to enter the connected state at the first time or before the first time. Alternatively, the first network device sends the first indication information to an access network device, where the first indication information indicates the access network device to page the terminal device at the first time or before the first time.

With reference to the first aspect, in some implementations of the first aspect, the first indication information includes information about the first time. Alternatively, the first indication information includes information about a second time, and the second time is before the first time.

With reference to the first aspect, in some implementations of the first aspect, the method further includes: The first network device sends second indication information to a second network device, where the second indication information indicates the second network device to position the terminal device.

With reference to the first aspect, in some implementations of the first aspect, that a first network device determines a first time includes: The first network device obtains the information about the first time from a third network device. Alternatively, the first network device obtains the information about the first time locally.

According to a second aspect, a positioning method is provided and includes: A terminal device receives first indication information sent by a first network device, where the first indication information is used for enabling the terminal device to enter a connected state at a first time or before the first time, and the first time is a scheduled time at which the terminal device is to be positioned. The terminal device enters the connected state at the first time or before the first time based on the first indication information.

According to the positioning method provided in this application, the terminal device enters the connected state based on the first indication information when a second network device initiates a positioning procedure or before the second network device initiates the positioning procedure. Compared with the conventional technology in which the terminal device starts to enter the connected state only after the second network device initiates the positioning procedure, a delay required for positioning the terminal device can be reduced in the solutions in this application.

With reference to the second aspect, in some implementations of the second aspect, the first indication information includes information about the first time, the terminal device enters the connected state at the first time or a third time based on the first indication information, the third time is determined by the terminal device, and the third time is before the first time. In this case, the terminal device has a capability of determining the third time. Alternatively, the first indication information includes information about a second time, the second time is before the first time, and the terminal device enters the connected state at the second time based on the first indication information.

With reference to the second aspect, in some implementations of the second aspect, the method further includes: The terminal device responds to a positioning procedure initiated by a second network device at the first time.

With reference to the second aspect, in some implementations of the second aspect, the method further includes: The terminal device sends third indication information to the second network device, where the third indication information indicates that the terminal device has entered the connected state.

According to a third aspect, a positioning method is provided and includes: A second network device receives third indication information, where the third indication information indicates that a terminal device has entered a connected state, the third indication information is sent by the terminal device after a first network device sends first indication information, the first indication information is used for enabling the terminal device to enter the connected state at a first time or before the first time, and the first time is a scheduled time at which the terminal device is to be positioned. The second network device initiates a positioning procedure, where the positioning procedure is used to position the terminal device.

According to the positioning method provided in this application, the second network device initiates the positioning procedure only after receiving the third indication information and determining that the terminal device enters the connected state. Compared with the conventional technology in which the second network device first initiates the positioning procedure and then waits for the terminal device to enter the connected state, a delay of positioning the terminal device can be reduced in the solutions of this application.

According to a fourth aspect, a positioning method is provided and includes: An access network device receives first indication information sent by a first network device, where the first indication information is used for enabling a terminal device to enter a connected state at a first time or before the first time, where the first time is a scheduled time at which the terminal device is to be positioned; and pages the terminal device at the first time or before the first time based on the first indication information.

According to the positioning method provided in this application, the access network device pages the terminal device when a second network device initiates a positioning procedure or before the second network device initiates the positioning procedure, so that the terminal device enters the connected state. Compared with the conventional technology in which the access network device pages the terminal device only after the second network device initiates the positioning procedure, a delay of positioning the terminal device can be reduced in the solutions in this application.

With reference to the fourth aspect, in some implementations of the fourth aspect, the first indication information includes information about the first time, and the access network device pages the terminal device at the first time or a fourth time based on the first indication information, where the fourth time is determined by the access network device, and the fourth time is before the first time. Alternatively, the first indication information includes information about a second time, the second time is before the first time, and the access network device pages the terminal device at the second time based on the first indication information.

According to a fifth aspect, a network device is provided. The network device includes a unit configured to perform the method in the first aspect or the implementations of the first aspect.

According to a sixth aspect, a terminal device is provided. The terminal device includes a unit configured to perform the method in the second aspect or the implementations of the second aspect.

According to a seventh aspect, a network device is provided. The network device includes a unit configured to perform the method in the third aspect or the implementations of the third aspect.

According to an eighth aspect, an access network device is provided. The access network device includes a unit configured to perform the method in the fourth aspect or the implementations of the fourth aspect.

According to a ninth aspect, a positioning method is provided and includes: A first network device receives a network attach request sent by a terminal device. The first network device sends fourth indication information to the terminal device, where the fourth indication information indicates the terminal device to keep in a connected state after the terminal device accesses a network.

According to the positioning method provided in this application, the first network device indicates the terminal device to keep in the connected state after the terminal device accesses the network. In this case, when the second network device initiates a positioning procedure, the terminal device is in the connected state. Therefore, compared with the conventional technology, in the technical solutions of this application, there is no need to wait for the terminal device to enter the connected state, thereby reducing a delay of positioning the terminal device.

With reference to the ninth aspect, in some implementations of the ninth aspect, the method further includes: The first network device sends fifth indication information to an access network device, where the fifth indication information indicates the access network device to prohibit setting the terminal device to a non-connected state.

In this case, in one aspect, the first network device indicates the terminal device to keep in the connected state after the terminal device accesses the network. In another aspect, the access network device is configured to prohibit setting the terminal device to the non-connected state. In this dual assurance manner, it can be better ensured that the terminal device is in the connected state when the second network device initiates the positioning procedure.

According to a tenth aspect, a positioning method is provided and includes: A terminal device sends a network attach request to a first network device. The terminal device receives fourth indication information sent by the first network device, where the fourth indication information indicates the terminal device to keep in a connected state after the terminal device accesses a network.

According to an eleventh aspect, a positioning method is provided and includes: An access network device receives fifth indication information sent by a first network device, where the fifth indication information indicates the access network device to prohibit setting a terminal device to a non-connected state.

According to a twelfth aspect, a network device is provided. The network device includes a unit configured to perform the method in the ninth aspect or the implementations of the ninth aspect.

According to a thirteenth aspect, a terminal device is provided. The terminal device includes a unit configured to perform the method in the tenth aspect.

According to a fourteenth aspect, an access network device is provided. The access network device includes a unit configured to perform the method in the eleventh aspect.

According to a fifteenth aspect, a computer-readable medium is provided. The computer-readable medium stores a computer program (which may also be referred to as code or instructions). When the computer program runs on a computer, the computer is enabled to perform the method in any one of the possible implementations of the first aspect, the second aspect, the third aspect, the fourth aspect, the ninth aspect, the tenth aspect, or the eleventh aspect.

According to a sixteenth aspect, a system is provided. The system includes a first network device and a second network device. The first network device is configured to perform the method in any one of the possible implementations of the first aspect or the ninth aspect, and the second network device is configured to perform the method in any one of the possible implementations of the third aspect.

With reference to the sixteenth aspect, in some implementations of the sixteenth aspect, the system further includes an access network device. The access network device is configured to perform the method in any one of the possible implementations of the fourth aspect or the eleventh aspect.

According to a seventeenth aspect, a network device is provided. The network device includes: a memory, configured to store a computer program; and a processor, configured to invoke the computer program from the memory and run the computer program, so that the network device implements the method in any one of the possible implementations of the first aspect, the second aspect, the third aspect, the fourth aspect, the ninth aspect, the tenth aspect, or the eleventh aspect.

According to an eighteenth aspect, a computer program product is provided. The computer program product includes computer program code, and when the computer program code is run by a computer, the computer is enabled to perform the method in any one of the possible implementations of the first aspect, the second aspect, the third aspect, the fourth aspect, the ninth aspect, the tenth aspect, or the eleventh aspect.

According to a nineteenth aspect, a chip is provided. A processing circuit is disposed on the chip, and the processing circuit is configured to perform the method in any one of the possible implementations of the first aspect, the second aspect, the third aspect, the fourth aspect, the ninth aspect, the tenth aspect, or the eleventh aspect.

### BRIEF DESCRIPTION OF DRAWINGS

FIG. 1 shows an architecture of a communication system to which an embodiment of this application is applicable;
FIG. 2 is a schematic diagram of interaction in an example of a positioning method according to this application;
FIG. 3 is a schematic diagram of interaction in another example of a positioning method according to this application;
FIG. 4 is a diagram of a location service architecture of a positioning method to which this application is applicable;
FIG. 5 is a schematic diagram of interaction in an example of a positioning method according to this application;
FIG. 6 is a schematic diagram of interaction in another example of a positioning method according to this application;
FIG. 7 is a schematic block diagram of an example of a network device according to this application; and
FIG. 8 is a schematic block diagram of another example of a network device according to this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

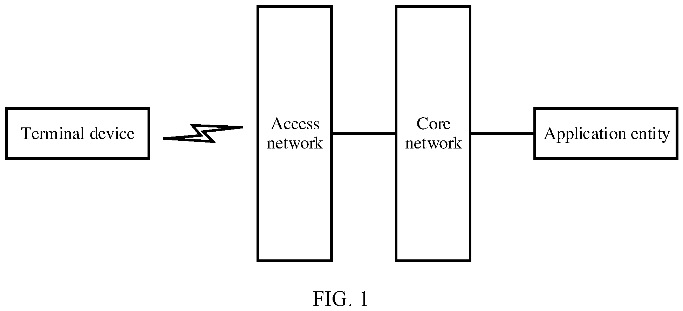

The technical solutions provided in this application may be applied to a communication system, as shown in FIG. 1, that can complete communication with a core network by accessing a network.

In embodiments of this application, a terminal device may be an internet of things device. An access network includes an access network device. The access network device is a device that provides a cell, for example, may be an access point (Access Point, AP) in a WLAN, a base station (Base Transceiver Station, BTS) in a GSM or CDMA, or may be a base station (NodeB, NB) in WCDMA, or a gNB in a new radio system (New Radio, NR) system, or may be an evolved NodeB (Evolved NodeB, eNB or eNodeB) in LTE, or may be a radio access network (Radio Access Network, RAN) device in a 5G network.

In this embodiment of this application, the core network may include but is not limited to a data storage and management network element, a mobility management network element, a location management network element, and a network exposure network element. The data storage and management network element is a network element configured to store and manage data of the terminal device. For example, in a 5G network, the data storage and management network element may be a unified data management function (Unified Data Management, UDM) network element. The mobility management network element is a network element configured to manage mobility of the terminal device. For example, in a 4G network, the mobility management network element may be a mobility management entity (Mobility Management Entity, MME), and in the 5G network, the mobility management network element may be an access and mobility management function (Access and Mobility Management Function, AMF) network element. The location management network element is a network element configured to manage a location of the terminal device. For example, in the 5G network, the location management network element may be a location management function (Location Management Function, LMF) network element. The network exposure network element is responsible for managing all external applications that expose network data, and ensuring security from the external applications to a 3GPP network. For example, in the 5G network, the network exposure network element may be a network exposure function (Network Exposure Function, NEF) network element.

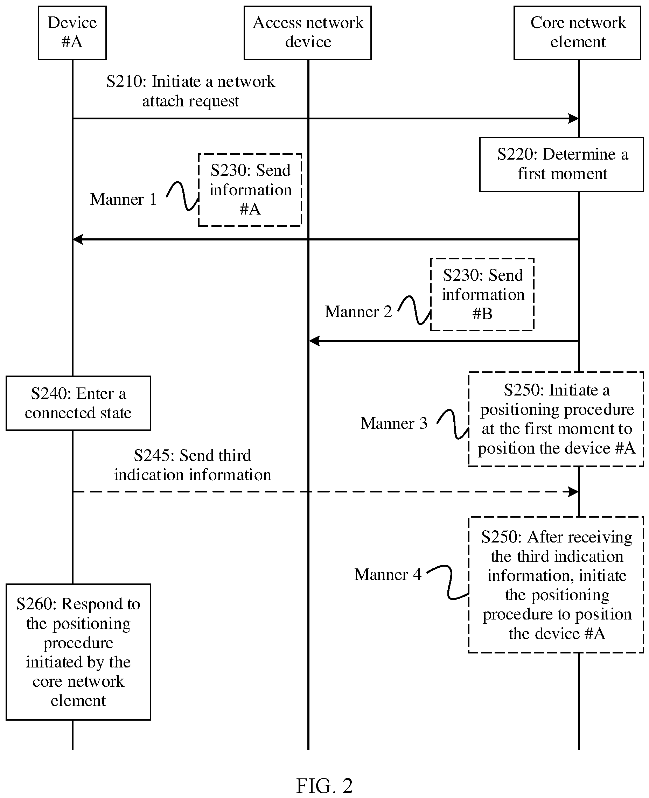

FIG. 2 is a schematic flowchart of an example of a positioning method according to this application. The method may be applied to the communication system shown in FIG. 1.

S210: A device #A initiates a network attach request to a core network element, where the network attach request message carries an identifier of the device #A. Correspondingly, the core network element receives the network attach request sent by the device #A.

S210 is optional.

S220: The core network element determines a first time, where the first time is a scheduled time at which the device #A is to be positioned.

For example, the first time may be a specific time or a cycle time. This is not limited in this application.

S230: The core network element sends first indication information, where the first indication information is used for enabling the device #A to enter a connected state at the first time or before the first time.

Three cases of content included in the first indication information are described below.

### Case 1:

The first indication information includes information about the first time.

### Case 2:

The first indication information includes information about the first time and information about a first identifier. The first identifier indicates the device #A to enter the connected state before the first time.

### Case 3:

The first indication information includes information about a second time. In this case, the core network element further needs to determine the second time based on the first time, where the second time is before the first time.

Two manners in which the core network element sends the first indication information are described below.

### Manner 1:

The core network element sends information #A (an example of the first indication information) to the device #A. Correspondingly, the device #A receives the information #A. In a possible implementation, the information #A is included in a response message #A of the network attach request. In another possible implementation, the information #A may not be included in a response message #A of the network attach request, for example, may be included in a downlink configuration message.

If the information #A includes the information shown in the case 1, the information #A indicates the device #A to enter the connected state at the first time.

If the information #A includes the information shown in the case 2, the information #A indicates the device #A to enter the connected state before the first time.

If the information #A includes the information shown in the case 3, the information #A indicates the device #A to enter the connected state at the second time.

### Manner 2:

The core network element sends information #B (another example of the first indication information) to an access network device. The information #B further includes information about the identifier of the device #A. Correspondingly, the access network device receives the information #B.

If the information #B includes the information shown in the case 1, the information #B indicates the access network device to page the device #A at the first time.

If the information #B includes the information shown in the case 2, the information #B indicates the access network device to page the device #A before the first time.

If the information #B includes the information shown in the case 3, the information #B indicates the access network device to page the device #A at the second time.

S240: The device #A enters the connected state.

There are two manners for the device #A to enter the connected state.

If S230 is performed in the manner 1, in S240, the device #A enters the connected state at the first time, the second time, or a third time based on the information #A sent by the core network element, that is, actively enters the connected state. The third time is determined by the device #Abased on the first time, and the third time is before the first time. It should be understood that a process in which the device #A actively enters the connected state is the same as that in the conventional technology. Details are not described herein.

If S230 is performed in the manner 2, in S240, the device #A receives a paging message sent by the access network device at the first time, the second time, or a fourth time, and enters the connected state, where the fourth time is determined by the access network device based on the first time, and the fourth time is before the first time. It should be understood that a process in which the device #A is paged by the access network device and then enters the connected state is the same as that in the conventional technology. Details are not described herein again.

It should be understood that the foregoing enumerated manner in which the device #A enters the connected state is merely an example for description. This application is not limited thereto.

S250: The core network element initiates a positioning procedure to position the device #A.

Two manners in which the core network element initiates the positioning procedure are described below.

### Manner 3:

The core network element initiates the positioning procedure at the first time based on the first time determined in S220.

### Manner 4:

After S240, the method further includes the following steps.

S245: The device #A sends third indication information to the core network element, where the third indication information indicates, to the core network element, that the device #A has entered the connected state.

In S250, the core network element receives the third indication information, and initiates the positioning procedure after determining, based on the third indication information, that the device #A has entered the connected state. In other words, the device #A may not be positioned based on the scheduled time at which the device #A is to be positioned.

S260: The device #A responds to the positioning procedure initiated by the core network element.

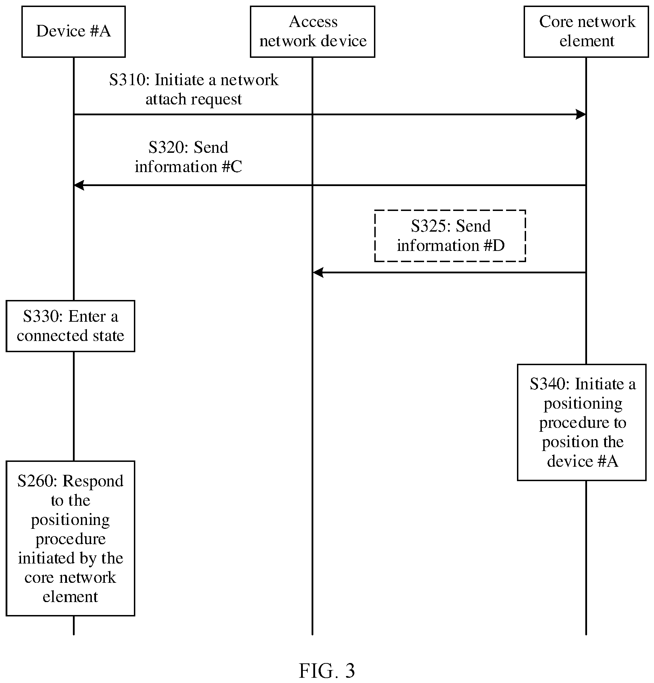

FIG. 3 is a schematic flowchart of another example of a positioning method according to this application. The method may be applied to the communication system shown in FIG. 1.

S310: A device #A initiates a network attach request to a core network element, where the network attach request message carries an identifier of the device #A. Correspondingly, the core network element receives the network attach request sent by the device #A.

S320: The core network element sends information #C (an example of fourth indication information) to the device #A, where the information #C indicates the device #A to keep in a connected state after the device #A accesses a network. The information #C may be included in a response message #B of the network attach request, or the information #C may be included in another downlink configuration message. Correspondingly, the device #A receives the information #C.

S330: The device #A keeps in the connected state or enters and keeps in the connected state based on the information #C.

S340: The core network element initiates a positioning procedure to position the device #A.

Because the device #A keeps in the connected state after S330, the core network element may position the device #A at any time after S330. For example, the core network element may initiate the positioning procedure at any time based on a requirement of the core network element or a request from another device, to position the device #A. A time at which the positioning procedure is initiated is not fixed.

In another possible implementation, the method further includes the following step.

S325: The core network element sends information #D (an example of fifth indication information) to the access network device, where the information #D indicates the access network device to prohibit setting the device #A to a non-connected state.

In this case, in one aspect, the core network element indicates the terminal device to keep in the connected state after the terminal device accesses the network. In another aspect, the access network device is configured to prohibit setting the terminal device to the non-connected state. In this dual assurance manner, it can be better ensured that the terminal device is in the connected state when the core network element initiates the positioning procedure.

It should be understood that steps related to the core network element in FIG. 2 and FIG. 3 may be performed by different network elements in different network architectures. The methods in FIG. 2 and FIG. 3 are described below by using a 5G network as an example.

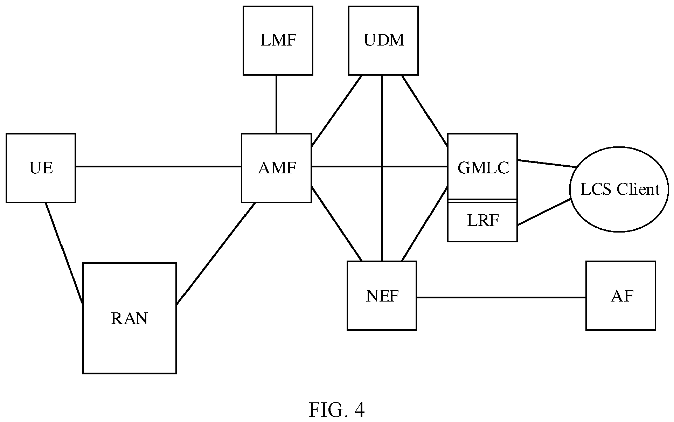

FIG. 4 is a diagram of a location service architecture to which the technical solutions provided in this application are applicable. The location service architecture further includes a gateway mobile location center (Gateway Mobile Location Center, GMLC), a location service client (LCS client), and a network exposure function (Network Exposure Function, NEF). The GMLC is configured to receive a location request from the LCS client, and transfer the location request to an AMF. The NEF is responsible for managing all external applications that expose network data, and ensuring security from the external applications to a 3GPP network.

In embodiments of this application, a first network device, a second network device, and a third network device may be core network elements. The first network device may be a network device having an access management function, for example, may be an AMF network element. The second network device may be a network device having a location management function, for example, may be an LMF network element. The third network device may be a network element having a data storage and management function, for example, may be a UDM network element.

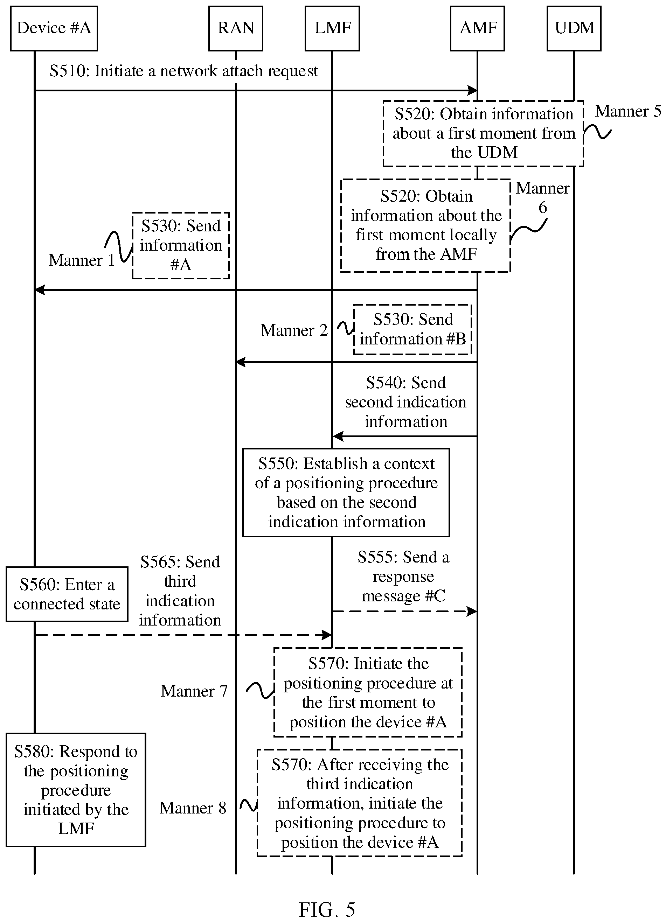

FIG. 5 is a schematic diagram of interaction in an example of a positioning method according to this application. The method may be applied to the location service architecture shown in FIG. 4, and the method corresponds to the method shown in FIG. 2.

S510: A device #A initiates a network attach request to an AMF, where the network attach request message carries an identifier of the device #A. Correspondingly, the AMF receives the network attach request sent by the device #A.

S520: The AMF determines a first time, where the first time is a scheduled time at which the device #A is to be positioned.

For example, the first time may be a specific time or a cycle time. This is not limited in this application.

Two manners in which the AMF determines the first time are described below.

### Manner 5:

A UDM stores subscription information of the device #A, where the subscription information includes information about the first time. The AMF may send a request message #A to the UDM. The request message #A includes an identifier of the device #A. Correspondingly, after receiving the request message #A, the UDM sends a response message #B (an example of a first response message) to the AMF, where the response message #B includes the information about the first time.

### Manner 6:

The AMF obtains information about the first time locally. The AMF is locally preconfigured with the information about the first time. For example, a network management system preconfigures context information of the device #A in the AMF. The context information includes information about the identifier of the device #A and the information about the first time. In this case, the AMF may locally query the information about the first time. Compared with the manner 1, signaling overheads can be reduced in this manner.

It should be understood that the foregoing enumerated manner in which the AMF determines the first time is merely an example for description. This application is not limited thereto.

S530: The AMF sends first indication information.

Content included in the first indication information is the same as content in the case 1 to the case 3 in S230.

A manner in which the AMF sends the first indication information is the same as the manner 1 or the manner 2 in S230.

In a possible implementation, the method may further include S535. The SMF establishes a location signaling data transmission user plane.

S540: The AMF sends second indication information to an LMF, where the second indication information indicates the LMF to position the device #A. Correspondingly, the LMF receives the second indication information.

Two cases of content included in the second indication information are described below.

### Case 4:

Information #E (an example of the second indication information) includes the information about a first time, information about an identifier of an access network device participating in a positioning procedure, and location privacy information of the device #A.

### Case 5:

Information #F (another example of the second indication information) includes information about an identifier of an access network device participating in a positioning procedure and location privacy information of the device #A. In other words, in this case, the AMF does not configure, for the LMF, the information about the scheduled first time at which the device #A is to be positioned.

It should be understood that a manner in which the AMF obtains the second indication information is similar to that in the conventional technology. For example, the AMF may obtain the foregoing information from the UDM.

S550: The LMF establishes a context of the positioning procedure of the device #A based on the received second indication information.

Two cases in which the LMF establishes the context of the positioning procedure are described below.

### Case 6:

If the second indication information in S540 includes the information shown in the case 4, the context of the positioning procedure of the device #A established by the LMF includes the scheduled first time at which the device #A is to be positioned, the identifier of the access network device participating in the positioning procedure, and the location privacy information of the device #A.

### Case 7:

If the second indication information in S540 includes the information shown in the case 5, the context of the positioning procedure of the device #A established by the LMF includes the identifier of the access network device participating in the positioning procedure and the location privacy information of the device #A. In other words, in this case, the context of the positioning procedure does not include the scheduled first time at which the device #A is to be positioned.

S560: The device #A enters a connected state, and synchronizes status information of the device #A to the AMF.

A manner in which the device #A enters the connected state is similar to that in S240. Details are not described herein again.

S570: The LMF initiates the positioning procedure to position the device #A.

Two manners in which the LMF initiates the positioning procedure are described below.

### Manner 7:

If the second indication information includes the information #E in S540, that is, the AMF configures, for the LMF, the scheduled first time at which the device #A is to be positioned, the LMF initiates the positioning procedure at the first time based on the second indication information.

### Manner 8:

If the second indication information includes the information #F in S540, that is, the AMF does not configure, for the LMF, the scheduled first time at which the device #A is to be positioned, after S560, the method further includes the following steps.

S565: The device #A sends third indication information to the LMF, where the third indication information indicates, to the LMF, that the device #A has entered the connected state.

In S570, the LMF receives the third indication information, and initiates the positioning procedure after determining, based on the third indication information, that the device #A has entered the connected state.

S580: The device #A responds to the positioning procedure initiated by the LMF.

In another possible implementation, after S550, the method may further include the following step.

S555: The LMF sends a response message #C to the AMF, where the response message #C indicates, to the AMF, that the LMF successfully receives the second indication information.

In the conventional technology, a main procedure of positioning a terminal device includes: An LCS client sends a location request message to a GMLC, where the message indicates an identifier of positioned LTE. The GMLC verifies whether the LCS client can initiate a location request. If the verification succeeds, the GMLC sends the location request to the AMF. The AMF verifies whether the LTE can be positioned. If the verification succeeds, the AMF sends the location request message to the LMF. That the LMF initiates the positioning procedure includes: The LMF indicates a RAN to configure a parameter that is of the UE and that is for sending measurement information, for example, time, an interval, and a used frequency. The RAN receives a measurement signal sent by the UE, and sends the measurement signal to the LMF. The LMF calculates a location result of the UE. Finally, the LMF notifies the AMF, the GMLC, and the LCS client of the location result of the UE.

In the foregoing process, after the LMF initiates the positioning procedure, the UE may not enter the connected state. In this case, a network device needs to first send a paging message to the UE, and the UE performs an RRC connection setup procedure after monitoring the paging message, so that the LTE enters the connected state. An entire paging process requires a long period of time (for example, 1 to 2 seconds). The positioning procedure can continue only after the UE enters the connected state. In other words, in a process of positioning the UE, after initiating the positioning procedure, the LMF needs to wait for the LTE that does not enter the connected state to enter the connected state. This significantly increases time required for the entire positioning procedure.

According to the positioning method in embodiments of this application, the device #A enters the connected state when the LMF initiates the positioning procedure or before the LMF initiates the positioning procedure. Compared with the conventional technology in which the device #A is paged by the network device and enters the connected state only after the LMF initiates the positioning procedure, a delay of the positioning procedure can be reduced according to the method.

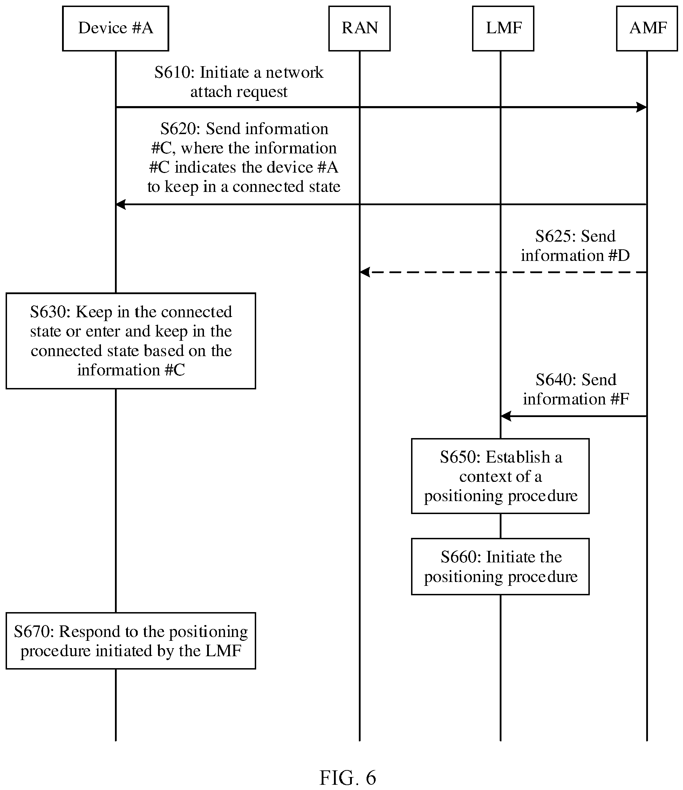

FIG. 6 is a schematic diagram of interaction in another example of a positioning method according to this application. The method may be applied to the location service architecture shown in FIG. 4, and the method corresponds to the method shown in FIG. 3.

S610: A device #A initiates a network attach request to an AMF, where the network attach request message carries an identifier of the device #A. Correspondingly, the AMF receives the network attach request sent by the device #A.

S620: The AMF sends information #C to the device #A, where the information #C indicates the device #A to keep in a connected state after the device #A accesses a network. The information #C may be included in a response message #B of the network attach request, or the information #C may be included in another downlink configuration message. Correspondingly, the device #A receives the information #C.

S630: The device #A keeps in the connected state or enters and keeps in the connected state based on the information #C, and synchronizes status information to the AMF.

S640: The AMF sends information #F to an LMF, where the information #F indicates the LMF to position the device #A. Correspondingly, the LMF receives the information #F.

The information #F includes information about an identifier of an access network device participating in a positioning procedure and location privacy information of the device #A.

It should be understood that a manner in which the AMF obtains second indication information is similar to that in the conventional technology. For example, the AMF may obtain content in the second indication information from a UDM.

S650: The LMF establishes a context of the positioning procedure of the device #A.

The context of the positioning procedure of the device #A established by the LMF includes an identifier of a serving access network device participating in the positioning procedure and the location privacy information of the device #A.

S660: The LMF initiates the positioning procedure to position the device #A.

Because the device #A keeps in the connected state after S630, the LMF may initiate the positioning procedure at any time after S650, to position the device #A. For example, the LMF may initiate the positioning procedure at any time based on a requirement of the LMF or a request from another device, to position the device #A. A time at which the positioning procedure is initiated is not fixed.

S670: The device #A responds to the positioning procedure initiated by the LMF.

In another possible implementation, the method further includes the following step.

S625: The AMF sends information #D to the access network device, where the information #D indicates the access network device to prohibit setting the device #A to a non-connected state.

In this case, in one aspect, the AMF indicates the terminal device to keep in the connected state after the terminal device accesses the network. In another aspect, the access network device is configured to prohibit setting the terminal device to the non-connected state. In this dual assurance manner, it can be better ensured that the terminal device is in the connected state when the LMF initiates the positioning procedure.

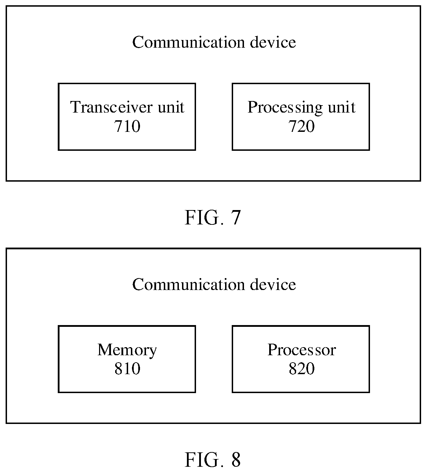

According to the foregoing method, FIG. 7 is a schematic block diagram of a communication device according to an embodiment of this application. The network device includes a transceiver unit 710 and a processing unit 720.

A case in which the communication device in FIG. 7 is a first network device is described below.

The processing unit 720 is configured to determine a first time, where the first time is a scheduled time at which a terminal device is to be positioned.

The transceiver unit 710 is configured to send first indication information, where the first indication information is used for enabling the terminal device to enter a connected state at the first time or before the first time.

In a possible implementation, the transceiver unit 710 is specifically configured to send the first indication information to the terminal device, where the first indication information indicates the terminal device to enter the connected state at the first time or before the first time.

In a possible implementation, the transceiver unit 710 is specifically configured to send the first indication information to an access network device, where the first indication information indicates the access network device to page the terminal device at the first time or before the first time.

In a possible implementation, the first indication information includes information about the first time.

In a possible implementation, the processing unit 720 is further configured to determine a second time based on the first time, where the second time is before the first time, and the first indication information includes information about the second time.

In a possible implementation, the transceiver unit 710 is further configured to send second indication information to a second network device, where the second indication information indicates the second network device to position the terminal device.

In a possible implementation, the transceiver unit 710 is configured to send a first request message to a third network device, where the first request message requests the information about the first time. The transceiver unit is further configured to receive a first response message sent by the third network device, where the first response message includes the information about the first time.

In a possible implementation, the processing unit 720 is configured to query the information about the first time locally from the network device.

In another possible implementation, the transceiver unit 710 is configured to receive a network attach request sent by the terminal device, and is configured to send information #C to the terminal device. Optionally, the transceiver unit 710 may be further configured to send information #D to the access network device.

A case in which the communication device in FIG. 7 is a terminal device is described below.

The transceiver unit 710 is configured to receive first indication information sent by a first network device, where the first indication information is used for enabling the terminal device to enter a connected state at a first time or before the first time, and the first time is a scheduled time at which the terminal device is to be positioned.

The processing unit 720 is configured to enable the terminal device to enter the connected state at the first time or before the first time based on the first indication information.

In a possible implementation, the first indication information includes information about the first time, and the processing unit 720 is specifically configured to enable the terminal device to enter the connected state at the first time.

In another possible implementation, the first indication information includes the information about the first time and information about a first identifier. The processing unit 720 is configured to determine a third time based on the first time, where the third time is before the first time. The processing unit 720 is further configured to enable the terminal device to enter the connected state at the third time.

In another possible implementation, the first indication information includes information about a second time, and the processing unit 720 is specifically configured to enable the terminal device to enter the connected state at the second time, where the second time is determined by the first network device, and the second time is before the first time.

In another possible implementation, the processing unit 720 is further configured to respond to a positioning procedure initiated by a second network device at the first time.

In another possible implementation, the transceiver unit 710 is further configured to send third indication information to the second network device, where the third indication information indicates that the terminal device has entered the connected state.

In another possible implementation, the transceiver unit 710 is configured to: send a network attach request to the first network device, and receive information #C sent by the first network device. The processing unit 720 is configured to enable the terminal device to keep in the connected state based on the information #C.

A case in which the communication device in FIG. 7 is a second network device is described below.

The transceiver unit 710 is configured to receive third indication information, where the third indication information indicates that a terminal device has entered a connected state, the third indication information is sent by the terminal device after a first network device sends first indication information, the first indication information is used for enabling the terminal device to enter the connected state at a first time or before the first time, and the first time is a scheduled time at which the terminal device is to be positioned.

The processing unit 720 is configured to initiate a positioning procedure, where the positioning procedure is used to position the terminal device.

A case in which the communication device in FIG. 7 is an access network device is described below.

The transceiver unit 710 is configured to receive first indication information sent by a first network device, where the first indication information is used for enabling a terminal device to enter a connected state at a first time or before the first time, and the first time is a scheduled time at which the terminal device is to be positioned.

The processing unit 720 is configured to page the terminal device at the first time or before the first time based on the first indication information.

In another possible implementation, the transceiver unit 710 is configured to receive information #D sent by the first network device. The processing unit 720 is configured to not set the terminal device to a non-connected state based on the information #D.

According to the foregoing method, FIG. 8 is a schematic block diagram of a communication device according to an embodiment of this application. The network device includes a memory 810 and a processor 820. The memory 810 is configured to store a computer program, and the processor 820 is configured to invoke the computer program from the memory and run the computer program. The network device may be configured to implement functions of the first network device, the terminal device, the second network device, or the access network device in the foregoing method.

This application further provides a system. The system includes a first network device and a second network device, and optionally, may further include an access network device. The system may be used for completing the foregoing method.

This application further provides a computer-readable medium. The computer-readable medium stores a computer program (which may also be referred to as code or instructions). When the computer program runs on a computer, the computer is enabled to perform the foregoing method.

This application further provides a computer program product. The computer program product includes computer program code. When the computer program code is run by a computer, the computer is enabled to perform the foregoing method.

This application further provides a chip. A processing circuit is disposed on the chip, and the processing circuit is configured to perform the foregoing method.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed.

The units described as separate parts may or may not be physically separate, and parts displayed as units may or may not be physical units, may be positioned in one position, or may be distributed on a plurality of network units. Some or all of the units may be selected based on actual requirements to achieve the objectives of the solutions in embodiments. In addition, functional units in embodiments of this application may be integrated into one processing unit, or each of the units may exist alone physically, or two or more units are integrated into one unit. When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:
determining, by a first network device, a first time, wherein the first time is a scheduled time at which a terminal device is to be positioned; and
sending, by the first network device, first indication information, wherein the first indication information is used for enabling the terminal device to enter a connected state at the first time or before the first time.

2. The method according to claim 1, wherein the sending, by the first network device, first indication information comprises:
sending, by the first network device, the first indication information to the terminal device, wherein the first indication information indicates the terminal device to enter the connected state at the first time or before the first time; or
sending, by the first network device, the first indication information to an access network device, wherein the first indication information indicates the access network device to page the terminal device at the first time or before the first time.

3. The method according to claim 1 or 2, wherein the first indication information comprises information about the first time; or
the first indication information comprises information about a second time, and the second time is before the first time.

4. The method according to any one of claims 1 to 3, wherein the method further comprises:
sending, by the first network device, second indication information to a second network device, wherein the second indication information indicates the second network device to position the terminal device.

5. The method according to any one of claims 1 to 4, wherein the determining, by a first network device, a first time comprises:
obtaining, by the first network device, the information about the first time from a third network device; or
locally obtaining, by the first network device, the information about the first time.

6. A positioning method, comprising:
receiving, by a terminal device, first indication information sent by a first network device, wherein the first indication information is used for enabling the terminal device to enter a connected state at a first time or before the first time, and the first time is a scheduled time at which the terminal device is to be positioned; and
entering, by the terminal device, the connected state based on the first indication information.

7. The method according to claim 6, wherein the first indication information comprises information about the first time, the terminal device enters the connected state at the first time or a third time based on the first indication information, the third time is determined by the terminal device, and the third time is before the first time; or
the first indication information comprises information about a second time, the second time is before the first time, and the terminal device enters the connected state at the second time based on the first indication information.

8. The method according to claim 6 or 7, wherein the method further comprises:
responding, by the terminal device, to a positioning procedure initiated by a second network device at the first time.

9. The method according to any one of claims 6 to 8, wherein the method further comprises:
sending, by the terminal device, third indication information to the second network device, wherein the third indication information indicates that the terminal device has entered the connected state.

10. A positioning method, comprising:
receiving, by a second network device, third indication information, wherein the third indication information indicates that a terminal device has entered a connected state, the third indication information is sent by the terminal device after a first network device sends first indication information, the first indication information is used for enabling the terminal device to enter the connected state at a first time or before the first time, and the first time is a scheduled time at which the terminal device is to be positioned; and
initiating, by the second network device, a positioning procedure based on the third indication information, wherein the positioning procedure is used to position the terminal device.

11. A network device, comprising:
a processing unit, configured to determine a first time, wherein the first time is a scheduled time at which a terminal device is to be positioned; and
a transceiver unit, configured to send first indication information, wherein the first indication information is used for enabling the terminal device to enter a connected state at the first time or before the first time.

12. The network device according to claim 11, wherein the transceiver unit is specifically configured to:
send the first indication information to the terminal device, wherein the first indication information indicates the terminal device to enter the connected state at the first time or before the first time; or
send the first indication information to an access network device, wherein the first indication information indicates the access network device to page the terminal device at the first time or before the first time.

13. The network device according to claim 11 or 12, wherein
the first indication information comprises information about the first time; or
the processing unit is further configured to determine a second time based on the first time, wherein the second time is before the first time, and the first indication information comprises information about the second time.

14. The network device according to any one of claims 11 to 13, wherein the transceiver unit is further configured to send second indication information to a second network device, wherein the second indication information indicates the second network device to position the terminal device.

15. The network device according to any one of claims 11 to 14, wherein the transceiver unit is further configured to send a first request message to a third network device, wherein the first request message requests the information about the first time; and
the transceiver unit is further configured to receive a first response message sent by the third network device, wherein the first response message comprises the information about the first time.

16. The device according to any one of claims 11 to 14, wherein the processing unit is configured to query the information about the first time locally from the network device.

17. A terminal device, comprising:
a transceiver unit, configured to receive first indication information sent by a first network device, wherein the first indication information is used for enabling the terminal device to enter a connected state at a first time or before the first time, and the first time is a scheduled time at which the terminal device is to be positioned; and
a processing unit, configured to enable the terminal device to enter the connected state based on the first indication information.

18. The terminal device according to claim 17, wherein
the first indication information comprises information about the first time, and the processing unit is specifically configured to enable the terminal device to enter the connected state at the first time; or
the processing unit is configured to determine a third time based on the first time, wherein the third time is before the first time, and the processing unit is further configured to enable the terminal device to enter the connected state at the third time.

19. The terminal device according to claim 17, wherein the first indication information comprises information about a second time, and the processing unit is specifically configured to enable the terminal device to enter the connected state at the second time, wherein the second time is before the first time.

20. The terminal device according to any one of claims 17 to 19, wherein
the processing unit is further configured to respond to a positioning procedure initiated by a second network device at the first time.

21. The terminal device according to any one of claims 17 to 20, wherein
the transceiver unit is further configured to send third indication information to the second network device, wherein the third indication information indicates that the terminal device has entered the connected state.

22. A network device, comprising:
a transceiver unit, configured to receive third indication information, wherein the third indication information indicates that a terminal device has entered a connected state, the third indication information is sent by the terminal device after a first network device sends first indication information, the first indication information is used for enabling the terminal device to enter the connected state at a first time or before the first time, and the first time is a scheduled time at which the terminal device is to be positioned; and
a processing unit, configured to initiate a positioning procedure based on the third indication information, wherein the positioning procedure is used to position the terminal device.

23. A system, comprising a first network device and a second network device, wherein
the first network device is configured to perform the method according to any one of claims 1 to 5; and
the second network device is configured to perform the method according to claim 10.

24. A network device, comprising:
a memory, configured to store a computer program; and
a processor, configured to invoke the computer program from the memory and run the computer program, to enable the network device to implement the method according to any one of claims 1 to 5;
enable the network device to implement the method according to any one of claims 6 to 9; or
enable the network device to implement the method according to claim 10.

25. A computer-readable storage medium, wherein the computer-readable storage medium stores a computer program; and when the computer program runs,
an apparatus is enabled to perform the method according to any one of claims 1 to 5;
an apparatus is enabled to perform the method according to any one of claims 6 to 9; or
an apparatus is enabled to perform the method according to claim 10.

26. A computer program product, wherein the computer program product comprises computer program code, and when the computer program code is run by a computer,
the computer is enabled to perform the method according to any one of claims 1 to 5;
the computer is enabled to perform the method according to any one of claims 6 to 9; or
the computer is enabled to perform the method according to claim 10.

27. A chip, wherein a processing circuit is disposed on the chip; and
the processing circuit is configured to perform the method according to any one of claims 1 to 5;
the processing circuit is configured to perform the method according to any one of claims 6 to 9;
the processing circuit is configured to perform the method according to claim 10.
